# EUROPEAN PATENT APPLICATION

(11) **EP 4 239 460 A1**
(43) Date of publication of application: **06.09.2023**
(21) Application number: 21905311.3
(22) Date of filing: 25.10.2021
(51) Int. Cl.: G06F 3/0481

(54) **CONTENT SHARING METHOD AND APPARATUS, AND DEVICE AND STORAGE MEDIUM**

(30) Priority: 14.12.2020 CN 202011471717
(71) Applicant: GUANGDONG OPPO MOBILE TELECOMMUNICATIONS CORP., LTD., Dongguan, Guangdong 523860 (CN)
(72) Inventor: MO, Boyu, Dongguan, Guangdong 523860 (CN)
(74) Representative: Ipside
(86) International application number: PCT/CN2021/126128
(87) International publication number: WO 2022/127382

(57) **Abstract**

Provided are a content sharing method and apparatus, a terminal, and a storage medium, wherein the method is applied to an electronic device having a display. The method includes: obtaining the position information of the target icon during the move operation in response to a move operation for a target icon in the first application interface; adjusting the interface display state of the second application if the location identified by location information is within the location range associated with the second application; sharing the target content corresponding to the target icon with the second application if the end position of the move operation is in the second application interface, in response to the end of the move operation.

## Description

### CROSS-REFERENCE TO RELATED APPLICATIONS

The present application claims priority to Chinese Patent Application No. 202011471717.6, filed on December 14, 2020, the entire disclosure of which is incorporated herein by reference.

### FIELD

Embodiments of the present disclosure relate to the field of terminal technologies, and more particularly, to a content sharing methods and apparatus, terminal, storage medium.

### BACKGROUND

With the increase of productivity level, electronic devices (e.g. smartphones, tablets) play an increasingly important role in people's work and life, and the variety and number of applications in electronic devices are increasing. When a user is using a mobile phone, there is usually at least one application's display interface displayed on the display screen.

### SUMMARY

Embodiments of the present disclosure provide a content sharing method, apparatus, a terminal, and a storage medium. Technical solutions are described below.

In a first aspect, a content sharing method is provided according to an embodiment of the present disclosure, applied to an electronic device having a display. The method includes: obtaining the position information of the target icon during the move operation in response to a move operation for a target icon in the first application interface; adjusting the interface display state of the second application if the location identified by location information is within the location range associated with the second application; sharing the target content corresponding to the target icon with the second application if the end position of the move operation is in the second application interface, in response to the end of the move operation.

In a second aspect, a content sharing apparatus is provided according to an embodiment of the present disclosure. The apparatus includes: obtainment module configured to obtain the position information of the target icon during the move operation in response to a move operation for a target icon in the first application interface; adjustment module configured to adjust the interface display state of the second application if the location identified by location information is within the location range associated with the second application; sharing module configured to share the target content corresponding to the target icon with the second application if the end position of the move operation is in the second application interface, in response to the end of the move operation.

In a third aspect, a terminal is provided according to an embodiment of the present disclosure. The terminal includes a processor, a memory and a communication bus. The memory is used to store content sharing programs, the communication bus is used to achieve connection communication between the processor and the memory, and the processor is used to execute content sharing programs stored in the memory. They are used to implement the following steps: obtaining the position information of the target icon during the move operation in response to a move operation for a target icon in the first application interface; adjusting the interface display state of the second application if the location identified by location information is within the location range associated with the second application; sharing the target content corresponding to the target icon with the second application if the end position of the move operation is in the second application interface, in response to the end of the move operation.

In a fourth aspect, a computer-readable storage medium is provided according to an embodiment of the present disclosure. The storage medium has at least one instruction stored thereon. The at least one instruction is configured to be executed by a processor to implement the content sharing method as described in the above aspect.

### BRIEF DESCRIPTION OF the DRAWINGS

FIG. 1A is a schematic diagram showing an implementation of a content sharing process according to an exemplary embodiment of the present disclosure.
FIG. 1B is a schematic diagram showing an application scenario of a content sharing process according to an exemplary embodiment of the present disclosure.
FIG. 2A is a schematic diagram showing an implementation of a content sharing process according to an exemplary embodiment of the present disclosure.
FIG. 2B is a schematic diagram showing an application scenario of a content sharing process according to an exemplary embodiment of the present disclosure.
FIG. 2C is a schematic diagram showing an application scenario of a content sharing process according to an exemplary embodiment of the present disclosure.
FIG. 3 is a schematic diagram showing an implementation of a content sharing process according to an exemplary embodiment of the present disclosure.
FIG. 4 is a schematic diagram showing an implementation of a content sharing process according to an exemplary embodiment of the present disclosure.
FIG. 5 is a schematic diagram showing an interface operation of a content sharing process according to an exemplary embodiment of the present disclosure.
FIG. 6 is a schematic diagram showing an interface operation of a content sharing process according to an exemplary embodiment of the present disclosure.
FIG. 7 illustrates a block diagram showing a structure of a content sharing apparatus according to an embodiment of the present disclosure.
FIG. 8 illustrates a block diagram showing a structure of a terminal according to an exemplary embodiment of the present disclosure.

### DETAILED DESCRIPTION

The technical solutions of the present disclosure are described in further detail below in connection with the accompanying drawings and embodiments. Obviously, the described embodiments are only a part of the embodiments of the present disclosure, and not all of the embodiments. Based on the embodiments of this disclosure, all other embodiments obtained by a person of ordinary skill in the art without making creative labor fall within the scope of protection of this disclosure.

In the following description, reference is made to "some embodiments" which describe a subset of all possible embodiments, but it is understood that "some embodiments" may be the same subset or a different subset of all possible embodiments, and may, without conflict combined with each other.

In the description that follows, suffixes such as "module," "part," or "unit" are used to denote components only to facilitate the description of this disclosure and have no specific meaning of their own. They have no specific meaning of their own. Thus, "module", "part" or "unit" may be used interchangeably.

It is noted that the terms "first/second/third" as used in embodiments of the present disclosure merely distinguish similar objects and do not imply a particular order for the objects, and it is understood that the terms "first/second/third" may be interchanged in a particular order or sequence where permitted. It is understood that the terms "first \second \third" may, where permitted, be interchanged in a particular order or sequence so that the embodiments of the present disclosure described herein can be implemented in an order other than that illustrated or described herein.

At present, electronic devices are limited by their own display screen size, and the content that can be displayed on the screen is limited. In the process of moving files or other objects, the display interface of different applications may be blocked, or the display interface of applications may have incomplete display problems. These not only make it difficult for users to easily and quickly move the target object to the target location, but also lead to misoperation and poor user experience

Based thereon, an embodiment of the present disclosure provides a content sharing method, applied to an electronic device having a display, the method comprises: in response to a move operation for a target icon in the first application interface, obtaining the position information of the target icon during the move operation; adjusting the interface display state of the second application if the location identified by the location identified by location information is within the location range associated with the second application; in response to the end of the move operation, sharing the target content corresponding to the target icon with the second application, if the end position of the move operation is located within the second application interface.

In some embodiments, the location identified by the location information is within the location range associated with the second application. Specifically, the location identified by the location information can be the location of the application icon for the second application. The location identified by the location information may be located within the second application interface. The location identified by the location information may be the location of the shortcut icon for the second application. The location identified by the location information can be the location of the shortcut launch bar of the second application.

In some embodiments, if the end position of the move operation is located in the second application interface, the target content corresponding to the target icon will be shared with the second application. Specifically, if the end position of the move operation is located in the location of the display object in the second application interface, the target content corresponding to the target icon will be shared with the target location corresponding to the display object.

In some embodiments, the type of the second application includes a communication type, and the display object includes a contact identifier. Sharing the target content corresponding to the target icon with the target location corresponding to the display object comprises sharing the target content corresponding to the target icon with the contact corresponding to the contact ID.

In some embodiments, the contact identifier includes at least one of the following types: a contact avatar, a contact number, a contact conversation list item, and a contact conversation page.

In some embodiments, the type of second application includes file management, and the display object includes folder identification. Sharing the target content corresponding to the target icon with the target location corresponding to the display object includes saving the target content corresponding to the target icon to the path where the folder is located.

In some embodiments, the type of second application includes the document editing application. Sharing the target content corresponding with the target icon to the second application includes saving the target content corresponding to the target icon to a file corresponding format of the document editing application.

In some embodiments, the interface display state of the second application includes at least one of the following: the size of the second application interface, the shape of the second application interface, the shape of the second application, and the position of the second application in the display screen.

In some embodiments, the method further includes: canceling the sharing of target content in response to the destination location of the move operation is within the first application interface.

In some embodiments, the method further comprises: displaying the second application on the display screen in a pre-adjusted state after the sharing has ended. Alternatively, after canceling the sharing, the second application is displayed on the display screen in a pre-adjusted state.

In some embodiments, the method further includes: in response to the end of the move operation, canceling the sharing of the target content if the end position of the move operation is located at the position of the title bar of the electronic device. Alternatively, in response to the end of the move operation, canceling the sharing of the target content if the end position of the mobile operation exceeds the display boundary of the electronic device.

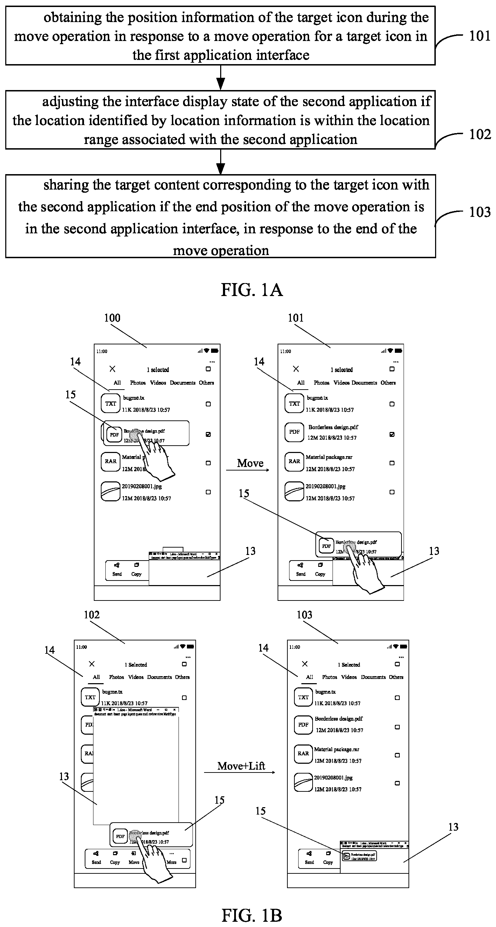

Embodiments of the present disclosure provide a content sharing method, which is applied to an electronic device having a display. The method can be realized by calling program code by a processor in the electronic device, and of course the program code can be saved in a storage medium of the electronic device. FIG. 1A is a schematic diagram showing an implementation of a content sharing process according to an exemplary embodiment of the present disclosure. As shown in FIG. 1A, the method comprises:
Step 101, obtaining the position information of the target icon during the move operation in response to a move operation for a target icon in the first application interface.

Here, the electronic devices can be various types of devices with information processing capabilities, such as cell phones, PDAs (Personal Digital Assistants), tablets, navigators, phablets, all-in-one computers, etc.

In embodiments of the present disclosure, the first application interface can be any interface of the first application, for example, if the first application is a communication application, the first application interface can be a contact list interface, a chat interface, etc.. If the first application is a file management application, the first application interface can be a folder list interface or a file list interface, etc.. If the first application is a photos application, the first application interface may be a display interface of all photos, etc. The target icon may be an icon corresponding to any content within the first application interface. For example, if the first application interface is a contact list interface, the target icon may be an icon corresponding to a contact card. If the first application interface is a chat interface, the target icon may be an icon corresponding to a file, picture, video, or other any information present in the chat interface. If the first application interface is a folder list interface, the target icon can be an icon corresponding to a folder. In other words, neither the type of the first application interface nor the type of the target icon is specifically limited in embodiments of the present disclosure.

Assuming that the electronic device is a cell phone with touch screen, the user can select the target icon in the first application interface by pressing or double clicking operation, and then drag the target icon to move within the touch screen. The position information of the target icon within the touch screen is changing as the target icon moves over time, so obtaining the position information of the target icon during the move operation, the position information including the position information of the target icon in the touch screen at different moments.

Step 102, adjusting the interface display state of the second application if the location identified by the location identified by location information is within the location range associated with the second application.

In embodiments of the present disclosure, the position information of the target icon within the touch screen is changing as the target icon moves over time. During the movement, once the location of the target icon identified by location information is within the position range associated with the second application, the interface display state of the second application will be adjusted.

In embodiments of the present disclosure, the second application is another application in the electronic device that is different from the first application, and the second application can be displayed on the display in a variety of different states. For example, when the second application is opened, the second application can be displayed on the display screen in a "reduced window" state, or the second application can be displayed on the display screen in a "bubble" state, or the second application can be displayed on the display screen in a "floating window" state, etc.. When the second application is closed, the second application can be displayed on the display screen in a state of "application icon", the second application can be displayed on the display screen in a state of "shortcut", and the like. In other words, the state of the "reduced window", the state of the "bubble", the state of the "floating window", the state of the "application icon", and the state of the "shortcut" all belong to the interface display state. The state of the "reduced window", the state of the "bubble", and the state of the "floating window" are interface display states when the application is opened. The state of the "application icon" and the state of the "shortcut" are the interface display state when the application is closed. And, when the second application is open, the second application may be displayed on top of the first application interface.

During the movement, once the location of the target icon identified by location information is within the position range associated with the second application, the interface display state of the second application will be adjusted. And, after adjusting the interface display state of the second application, if the move operation is not finished, the interface display state of the second application is kept unchanged even if the location of the target icon identified by location information is again within the location range associated with the second application. In embodiments of the present disclosure, the end of the move operation can be the user doing the lift operation, and the dwell during the move is not the end of the move operation.

The location identified by the location information is within the location range associated with the second application. Specifically, the location identified by the location information can be the location of the application icon for the second application. The location identified by the location information may be located within the second application interface. The location identified by the location information may be the location of the shortcut icon for the second application. The location identified by the location information can be the location of the shortcut launch bar of the second application.

For example, if the second application is displayed on the display in a "reduced window" state, the location identified by location information is within the location range associated with the second application means that the location of the target icon overlaps with any location within the second application interface. If the second application is displayed on the display in a "bubble" state, the location identified by location information is within the location range associated with the second application means that the target icon is located in the "bubble" interface of the second application. If the second application is displayed as a "shortcut" in the launch bar, the location identified by location information is within the range of locations associated with the second application means that the target icon is located in the "shortcut" interface of the second application in the launch bar.

In some embodiments, the interface display state of the second application includes at least one of : the size of the second application interface, the shape of the second application interface, the form of the second application, and the position of the second application on the display.

Specifically, the size of the second application interface refers to the size of the second application interface. For example, before moving the target icon, the size of the second application interface is 5cm* 1cm, then in response to the move operation for the target icon in the first application interface, the position information of the target icon during the move operation is obtained; if the location identified by location information is within the position range associated with the second application, the size of the second application interface will be adjusted to 15cm* 5cm.

Specifically, the form of the second application refers to an interface display state unique to the second application. For example, the chat bubble of WeChat, the floating window, shortcuts, or full screen display of downloading applications, and so on. Assuming that the second application is displayed on the display in a floating window before moving the target icon, in response to a move operation for the target icon in the interface of the first application, the position information of the target icon during the move operation is obtained. If the location identified by location information is within the position range associated with the second application, the interface display state of the second application will be adjusted, such as adjusting the display status of the second application from the floating window to full screen, so that the second application is displayed on the display in a state different from the state before the adjustment. For example, assuming that before moving the target icon, the second application is displayed on the display in a "shortcut" state, in response to a move operation for the target icon in the first application interface, the position information of the target icon is obtained during the move operation. If the location identified by location information is within the position range associated with the second application, the second application will be opened and displayed on the center of the display in a "reduced window" state.

The position of the second application on the display screen refers to coordinate information of the second application on the display screen. For example, before moving a target icon, if the coordinates of the second application on the display screen are (x=1400, y=2500), then in response to a move operation for the target icon in the interface of the first application, the position information of the target icon during the move operation is obtained. If the location identified by location information is within the position range associated with the second application, the display coordinates of the second application will be adjusted to (x=750, y=1250).

The adjustment of the interface display state of the second application may be an adjustment of only the position of the second application on the display, or may be an adjustment of both the position of the second application on the display and the size of the second application interface. In other words, the adjustment of the interface display state of the second application in embodiments of the present disclosure may be an adjustment of one of the interface display state of the second application, or may be an adjustment of multiple contents of the interface display status of the second application, and there is no limitation on the specific contents of the adjustment of the interface display state in embodiments of the present disclosure. For example, the second application is displayed on the lower right corner of the electronic device as a "bubble", and if the icon of an object in the first application is selected and dragged onto the "bubble", the display state of the second application is changed from "bubble" to "full-screen window" on the center of the display.

Step 103, sharing the target content corresponding to the target icon with the second application if the end position of the move operation is in the second application interface, in response to the end of the move operation.

In some embodiments, the method further comprises: displaying the second application on the display in a pre-adjusted state after the sharing is finished. For example, before moving the target icon, the coordinates of the second application on the display screen are (x=1400, y=2500). In response to a move operation for the target icon in the first application interface, obtaining the position information of the target icon during the move operation. If the location identified by location information is within the range of positions associated with the second application, adjusting the display coordinates of the second application on the display to (x=750, y=1250). When the move operation is over and the target content corresponding to the target icon is shared to the second application, the display coordinates of the second application on the display are restored to (x=1400, y=2500).

In embodiments of the present disclosure, if the display screen is a touch screen and the movement operation can be a touch movement operation on the touch screen, the end of the movement operation can be a lifting operation made after moving a certain distance. The end point of the moving operation may be the coordinate corresponding to the lifting operation. Alternatively, the movement operation can be a space movement gesture operation in front of a display screen of an electronic device, and the end of the movement operation can be an end gesture that occurs after the movement operation has moved a certain distance.

In some embodiments, the end point location of the mobile operation is located within the second application interface, which may mean that the end point location of the mobile operation is located within an area associated with the second application interface. For example, when the second application is a document editing APP (Application, Software Application), the end point location of the mobile operation is located within the second application interface means that the end point location of the mobile operation is located within an editing area of the document editing APP. When the second application is a chat APP, the end point location of the mobile operation is located within the second application interface means that the end point location of the mobile operation is located on a chat list within a chat display interface.

In some embodiments, the method further comprises:
Step 11b, displaying the second application on the display in a pre-adjusted state after the sharing is finished;
Step 12b, displaying the second application on the display in a pre-adjusted state after canceling sharing.

In some embodiments, in response to a move operation for a target icon in the first application interface, obtaining the position information of the target icon during the move operation. Adjusting the interface display state of the second application if the location identified by the location identified by location information is within the location range associated with the second application. In response to the end of the move operation, if the end position of the move operation is located within the second application interface, the target content corresponding to the target icon will be shared to the second application. Therefore, it can achieve sharing the content of the first application to the second application on the display screen in embodiments of the present disclosure.

Based on the preceding embodiments, embodiments of the present disclosure further provide a content sharing method, applied to an electronic device having a display, the method comprising:
Step 111, in response to a move operation for a target icon in the first application interface, obtaining position information of the target icon during the move operation.
Step 112, adjusting the interface display state of the second application if the location identified by location information belongs to the application icon location of the second application, or, the location identified by location information may be within the interface of the second application, or, the tlocation identified by location information belongs to the location of the shortcut icon for the second application, or, the location identified by location information belongs to the location of the shortcut launch bar for the second application.

For example, when the second application is a document editing application, if the target icon is located in the shortcut identification of the document editing application, a new document will be created and the document will be displayed in full screen. Alternatively, if the target icon is located within a floating window of a document editing application on the lower right corner of the display screen, the floating window of the document editing application can be adjusted from the lower right corner of the display screen to the center of the display screen, and the floating window can also be enlarged.

Step 113, in response to the end of the move operation, if the end position of the move operation is located within the second application interface, the target content corresponding to the target icon is shared to the second application.

For example, when the second application is a document editing application, if the target icon is located in the shortcut identification of the document editing application, a new document will be created and the document will be displayed in full screen. If the end position of the move operation is located in the new document interface, the new document is used to record the target content corresponding to the target icon.

In embodiments of the present disclosure, the second application may be a system application, such as a photo application, the second application may also be a third party application, such as WeChat. For example, the first application is a folder management application and the second application is a photo application, the second application is displayed above the first application and the second application is displayed in a size of 5cm*3 cm on the lower right corner of the display. The user selects an image in the folder management application and moves the icon corresponding to the image, and if the icon is located within the interface of the photo application, the position of the photo application will be adjusted from the lower right cornenr of the display to the center of the display and the size of the photo application will be adjusted from 5cm*3cm to 10*6cm. So that the photo application is displayed on the display screen in a state different from that before adjustment. If the user continues to move the icon onto the screen capture category item of the photo application and performs a lift operation, the image corresponding to the icon is saved to the screen capture category item.

As another example, the first application is a file management application, and the second application is WeChat. The file management application is displayed in full screen, and the WeChat is opened in the form of a "chat bubble" and displayed on the upper left corner of the display screen. The user selects an image in the file management application and moves the icon corresponding to the image. If the location of the icon is located on the "chat bubble", the interface display status of the WeChat will be changed from "chat bubble" to "narrow window" and displayed on the center of the display screen. So that the WeChat will be displayed on the display screen in a different state than before adjustment. If the user continues to move the icon onto the group ID of the WeChat and performs a lift operation, the image corresponding to the icon is shared with the contact corresponding to the group ID.

Based on the preceding embodiments, embodiments of the present disclosure further provide a content sharing method, applied to an electronic device having a display, the method comprising:
Step 121, in response to a move operation for a target icon in the first application interface, obtaining the position information of the target icon during the move operation.
Step 122, adjusting the interface display state of the second application if the location identified by the location identified by location information is within the location range associated with the second application.
Step 123, in response to the end of the move operation, if the end position of the move operation is located within the second application interface, the target content corresponding to the target icon is shared to the second application.
Step 124, the second application may be document editing applications. Sharing the target content corresponding to the target icon to the second application includes saving the target content corresponding to the target icon to a file in a format corresponding to the document editing application.

In some embodiments, the method further comprises: after saving the target content corresponding to the target icon to a file in a format corresponding to the document editing application, displaying the document editing application on the display in a pre-adjusted state.

For example, the first application is an album application, and the target icon is the icon corresponding to the target image. If a user selects the target icon and drags it onto the display interface of a document editing application opened, the position of the document editing application opened is adjusted from the lower right corner of the display screen to the center of the display screen. If the user continues to drag and drop the icon into a file in the corresponding format of the document editing application and performs a lifting operation, the target image is shared to the file in the corresponding format of the document editing application. After sharing, adjust the position of the document editing application to the position before dragging.

FIG. 1B is a schematic diagram showing an application scenario of a content sharing process, as shown in Fig 1B, the display of the electronic device shows a first application interface 14 and a second application 13 in picture 100, , and the second application 13 is a document editing application, and the user selects a target icon 15 corresponding to the target content in the first application interface 14 by a touch and press operation, so that the user can perform a move operation on the selected target icon 15. As shown in picture 101, if the location of the target icon 15 is within the location associated with the second application 13 (e.g., the location of the target icon 15 is located within the interface of the second application 13), the interface display state of the second application 13 is adjusted so that the second application is displayed in a different state on the display. And the adjusted interface is shown in picture 102, the second application 13 is enlarged and placed in the center of the display. When the end position of the move operation is located in one of the files of the second application 13 (including some or all of the interface of the target icon 15 is located in one of the files of the second application 13) and the user does the lift operation, sharing the target content corresponding to the target icon 15 to the file of the second application 13, while displaying the second application 13 in the pre-adjusted state on the display (i.e., shrinking the second application 13 to the pre-adjusted size and placing the second application 13 on the display to the pre-adjusted position). The interface after sharing is shown in Fig 103.

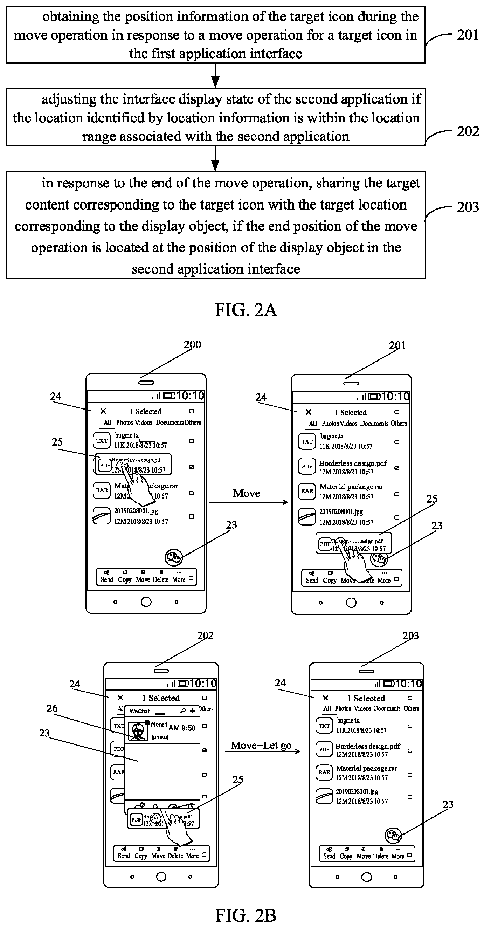

Based on the aforementioned embodiments, the present disclosure embodiment further provides a content sharing method, which is applied to an electronic device having a display screen. FIG. 2A is a schematic diagram showing an implementation of a content sharing method according to an exemplary embodiment of the present disclosure, as shown in FIG. 2A, the method comprising:
Step 201, obtaining the position information of the target icon during the move operation in response to a move operation for a target icon in the first application interface.
Step 202, adjusting the interface display state of the second application if the location identified by location information is within the location range associated with the second application.
Step 203, in response to the end of the move operation, if the end position of the move operation is located within the second application interface, the target content corresponding to the target icon will be shared with the target corresponding to the display object.

In some embodiments, the method further comprises:
Step 21, displaying the second application on the display in its pre-adjusted state after the sharing is completed;
Step 22, displaying the second application on the display in its pre-adjusted state after the sharing is cancelling.

In some embodiments, in response to a move operation for a target icon in the first application interface, obtaining the position information of the target icon during the move operation. Adjusting the interface display state of the second application if the location identified by the location identified by location information is within the location range associated with the second application. In response to the end of the move operation, if the end position of the move operation is located within the second application interface, the target content corresponding to the target icon will be shared to the second application. Therefore, it can achieve sharing the content of the first application to the second application on the display screen in embodiments of the present disclosure.

Embodiments of the present disclosure further provide a content sharing method, applied to an electronic device having a display, the method comprising:
Step 211, in response to a move operation for a target icon in the first application interface, obtaining the position information of the target icon during the move operation.
Step 212, adjusting the interface display state of the second application if the location identified by the location identified by location information is within the location range associated with the second application.
Step 213, in response to the end of the move operation, if the end position of the move operation is located within the second application interface, the target content corresponding to the target icon will be shared with the target corresponding to the display object.
Step 214, the second application includes a communication application, and the display object includes a contact identifier. The method of sharing target content corresponding to the target icon to a target location corresponding to the display object includes sharing target content corresponding to the target icon to a contact corresponding to the contact identifier.In some embodiments, the contact identification includes at least one of: a contact avatar, a contact number, a contact conversation list item, and a contact conversation page.

In some embodiments, the contact identifier includes at least one of the following types: a contact avatar, a contact number, a contact conversation list item, and a contact conversation page.

For example, the first application is a file management app, the target icon is the icon corresponding to the folder to be shared (including files within the folder), the communication application is WeChat, the display object is a chat list in the chat interface, and the WeChat is displayed in an icon state on the menu bar in the lower right corner. If a user selects an icon corresponding to the folder and performs a drag operation, and drags the position of the icon onto the WeChat, the state of adjusting the WeChat to a floating window is displayed in the center of the display screen. When a user drags an icon corresponding to the folder onto the chat list, the folder (including files within the folder) is shared with the contacts corresponding to the chat list. After the sharing is completed, the WeChat is displayed again in the pre-adjusted state on the display, that is, the WeChat is displayed again in the icon state on the menu bar in the lower right corner.

FIG. 2B is a schematic diagram showing an application scenario of a content sharing process, As shown in FIG. 2B, the display screen of the electronic device displays a first application interface 24 and a second application 23. The first application is a file management application, and the second application 23 is a communication application. The user determines the target icon 25 in the first application interface 24 by touching and pressing. In this way, the user can move the selected target icon 25. At this time, as shown in Picture 201, if the position of the target icon 25 is within the range of positions associated with the second application 23 (such as the position of the target icon 25 within the interface of the second application 23), the interface display state of the second application 23 can be adjusted from a bubble to a floating window and moved to the center of the display screen. The adjusted interface is shown in Picture 202. When the end position of the mobile operation is located at the location of a contact identifier 26 within the second application 23 (including a portion or all of the interface of the target icon 25 located at the location of a contact identifier 26 within the second application 23), and the user performs a lift operation, the target content corresponding to the target icon 25 is shared with the contact corresponding to the contact identifier 26, At the same time, the second application will be changed into a bubble and displayed in the lower right corner of the display screen. The interface is shown in Picture 203 when the sharing is finished.

Embodiments of the present disclosure further provide a content sharing method, applied to an electronic device having a display, the method comprising:
Step 221, in response to a move operation for a target icon in the first application interface, obtaining the position information of the target icon during the move operation.
Step 222, adjusting the interface display state of the second application if the location identified by the location identified by location information is within the location range associated with the second application.
Step 223, in response to the end of the move operation, if the end position of the move operation is located within the second application interface, the target content corresponding to the target icon will be shared with the target corresponding to the display object.
Step 224, the second application includes a file management application, and the display object includes a folder identifier. The method of sharing the target content corresponding to the target icon to the target corresponding to the display object includes saving the target content corresponding to the target icon to the path where the folder is located.

For example, the first application is WeChat, and the target icon is the icon corresponding to the video received by the user in the chat interface to be shared. If the user selects the icon corresponding to the received video and performs a drag operation, and drags the position of the icon into the file management application interface, the file management application is adjusted to a full-screen interface display state. When a user drags the icon corresponding to the video onto a folder in the file management application and performs a lifting operation, the user saves the video to the path where the folder is located and restores the display interface of the file management class application to the non-full-screen state before adjustment when the saving is finished.

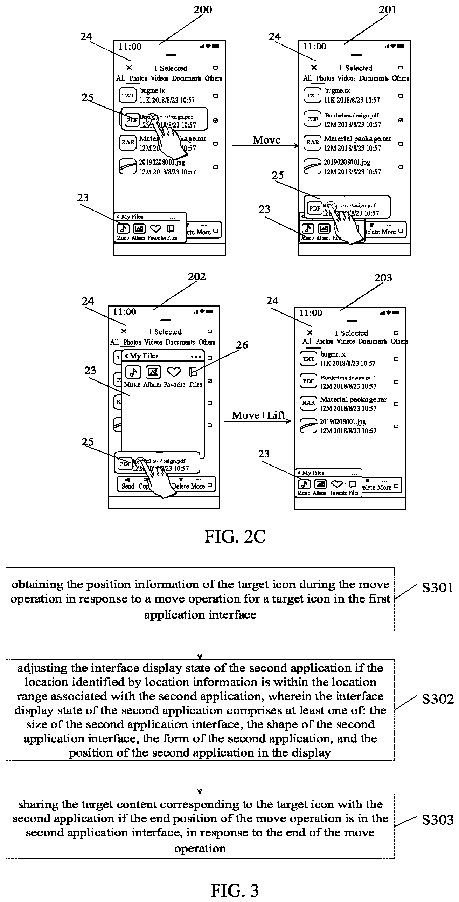

FIG. 2C is a schematic diagram showing an application scenario of a content sharing process according to an exemplary embodiment of the present disclosure. As shown in Figure 2C, the electronic device displays a first application interface 24 and a second application 23, and the second application 23 is a file management application. The user determines the target icon 25 in the first application interface 24 through a touch and press operation. In this way, the user can move the selected target icon 25. At this time, as shown in Picture 201, if the position of the target icon 25 is within the range of positions associated with the second application 23 (such as the position of the target icon 25 is within the interface of the second application 23), adjust the interface display state of the second application 23, So that the second application 23 is displayed on the display screen in a state different from that before adjustment: amplify the second application 23 and place it in the center of the display screen. The adjusted interface is shown in Picture 202. When the end position of the move operation is located at the location of a folder identifier 26 within the second application 23 (including part or all of the interfaces of the target icon 25 is located at the location of a folder identifier 26 within the second application 23), and the user performs a lift operation, the content corresponding to the target icon 25 is saved to the path where the folder identifier 26 is located. At the same time, Reduce the size of the second application 23 to the size before adjustment, and adjust the position of the second application 23 on the display screen to the position before adjustment. The interface is shown in Picture 203 when the sharing is finished.

Embodiments of the present disclosure further provide a content sharing method, applied to an electronic device having a display, the method comprising. FIG. 3 is a schematic diagram showing an implementation of a content sharing process according to an exemplary embodiment of the present disclosure, as shown in Fig. 3, the method comprises:
Step 301, obtaining the position information of the target icon during the move operation in response to a move operation for a target icon in the first application interface.
Step 302, adjusting the interface display state of the second application if the location identified by the location identified by location information is within the location range associated with the second application, the interface display state of the second application includes at least one of : the size of the second application interface, the shape of the second application interface, the form of the second application, and the position of the second application on the display.
Step 303, sharing the target content corresponding to the target icon with the second application if the end position of the move operation is in the second application interface, in response to the end of the move operation.

Embodiments of the present disclosure further provide a content sharing method, applied to an electronic device having a display, the method comprises:
Step 311, in response to a move operation for a target icon in the first application interface, obtaining the position information of the target icon during the move operation.
Step 312, adjusting the interface display state of the second application if the location identified by the location identified by location information is within the location range associated with the second application, the interface display state of the second application includes at least one of : the size of the second application interface, the shape of the second application interface, the form of the second application, and the position of the second application on the display.
Step 313, sharing the target content corresponding to the target icon with the second application if the end position of the move operation is in the second application interface, in response to the end of the move operation.
Step 314, cancelling the sharing of the target content corresponding to the target icon with the second application if the end position of the move operation is located within the first application interface, in response to the end of the move operation.

In some embodiments, the method further comprises:
Step 31, displaying the second application on the display in its pre-adjusted state after the sharing is finished.
Step 32, displaying the second application on the display in its pre-adjusted state after the sharing is cancelled.

In some embodiments, the method further comprises:
In response to the end of the move operation, canceling the sharing of the target content if the end position of the move operation is located at the position of the title bar of the electronic device.

Alternatively, in response to the end of the move operation, canceling the sharing of the target content if the end position of the mobile operation exceeds the display boundary of the electronic device.

After completing the move operation, if the end position of the move operation is located within the first application interface, or if the end position of the move operation is located on the title bar of the display screen, or if the end position of the move operation exceeds the boundary of the display screen, these can be considered that the cancelling sharing command has been received. In other words, in embodiments of the present disclosure, there are no specific restrictions on the implementation methods of cancelling sharing.

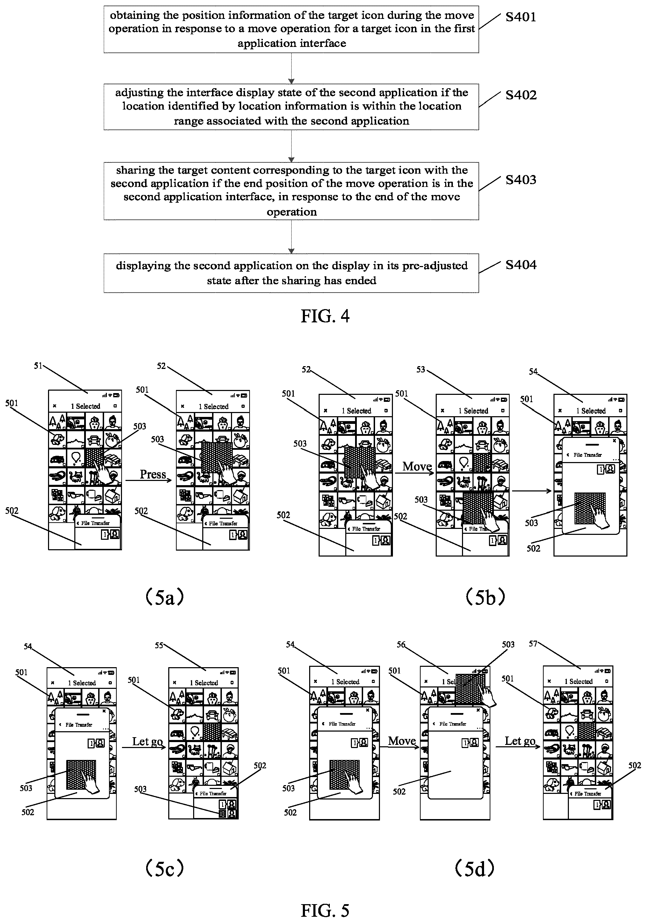

The present disclosure embodiment further provides a content sharing method, which is applied to an electronic device having a display screen. FIG. 4 is a schematic diagram showing an implementation of a content sharing process according to an exemplary embodiment of the present disclosure, as shown in FIG. 4, the method comprises:
Step 401, in response to a move operation for a target icon in the first application interface, obtaining the position information of the target icon during the move operation.
Step 402, adjusting the interface display state of the second application if the location identified by the location identified by location information is within the location range associated with the second application.
Step 403, sharing the target content corresponding to the target icon with the second application if the end position of the move operation is in the second application interface, in response to the end of the move operation.
Step 404, displaying the second application on the display in its pre-adjusted state after the sharing is finished.

In embodiments of the present disclosure, in response to a move operation for a target icon in the first application interface, obtaining the position information of the target icon during the move operation. Adjusting the interface display state of the second application if the location identified by the location identified by location information is within the location range associated with the second application. In response to the end of the move operation, if the end position of the move operation is located within the second application interface, the target content corresponding to the target icon will be shared to the second application. After the sharing is completed, the second application is displayed on the display screen in its pre-adjusted state, which enables convenient operation from sharing content from the first application to the second application on the display screen, avoids accidental touching, and the interface display state of the application after sharing is completed is automatically adjusted to the pre-adjusted state.

Embodiments of the present disclosure further provide a content sharing method applied to an electronic device having a display, the method comprises:
Step 411, In the first application interface, determining sharing the target icon corresponding to the target content.

In some embodiments, step 411 can be achieved by obtaining a press operation on the first application interface if the display screen is a touch screen, and determining a target icon to be shared if the duration of the pressing operation exceeds a preset duration. Alternatively, if the number of consecutive presses for the press operation exceeds a preset number, a target icon to be shared is determined, wherein the press object for the press operation is a target icon.

In other words, the target icon to be shared can be determined by pressing the selected button. Moreover, the target icon can be various, for example, the target icon can be a corresponding icon for text, pictures, videos, files, and the like.

Optionally, a target icon to be shared can also be determined through a virtual press operation. For example, mouse simulation of click, press, space gesture, VR (virtual reality technology) operations, and so on. For example, when a user is operating an electronic device, he or she can perform a selection operation through a spaced gesture. The camera of the electronic device captures the user's gesture in front of the display screen, and then uses algorithms to identify the shape, position, and other information of the gesture to determine the target icon which to be shared. Of course, VR technology can also be used to create a computer simulation system to generate a simulation environment that represents objects such as electronic devices through three-dimensional models. This allows the user to determine a target icon to share in the 3D model.

Step 412, in response to a move operation for a target icon in the first application interface, obtaining the position information of the target icon during the move operation.

Step 413, adjusting the interface display state of the second application if the location identified by the location identified by location information is within the location range associated with the second application.

Step 414, in response to the end of the move operation, if the end position of the move operation is located within the second application interface, sharing the target content corresponding to the target icon with the second application.

In embodiments of the present disclosure, the end position of the movement operation is located within the second application interface, which may be that part or all of the interface of the target icon is located within the second application interface. For example, when the interface of the user moving the target icon intersects with the interface of the second application, it can be considered that the end position of the moving operation is located within the second application interface.

Step 415, in response to the end of the mobile operation, if the end position of the mobile operation is located within the first application interface, cancelling the sharing of the target content.

In embodiments of the present disclosure, if the end position of the mobile operation is located within the second application interface, the content sharing will be performed. If the end position of the mobile operation is located within the first application interface, the content sharing is cancelled.

Step S416: after the content sharing is completed, displaying the second application on the display in the pre-adjusted state.

Whether sharing the target content to the second application or canceling the sharing of the target content, the second application is displayed on the display in the pre-adjusted state.

In some embodiments, the step 411 includes:
Step 41b, obtaining a press operation on the first application interface; if the duration of the pressing operation exceeds a preset duration, the target icon corresponding to the target content to be shared is determined.
Step 42b, if the number of consecutive presses for the press operation exceeds a preset number, determining sharing the target icon corresponding to the target content.

The prior art, based on Android native capabilities, can display the second application by an application floating window, and then the bottom interface is the page of the first application, at which time the user can share the files in the first application to the second application by dragging and dropping operation. For example, the user can press and holid a file in the first application to bring the interface into the drag-and-drop state, and when the user releases the hand within the floating window of the second application, the sharing operation can be triggered and the file will be sent to the second application in a specific form. and when the user releases the hand outside the floating window of the second application, the drag-and-drop sharing can be cancelled. However, in order to conveniently and unobstructedly select files to share from the first application, users typically place the second application in the corner area of the display screen. Therefore, this can cause a problem that users cannot accurately share the file to the second application after selecting it, and the user experience is very poor.

Therefore, embodiments of the present disclosure provide a method of dragging content from the bottom application and sharing it to a floating window. The method will make a judgment based on the user's operation. The user will first manually move the floating window away to facilitate selection of content to be shared and drag and drop the icon of the content to be shared. After the user long presses and triggers the drag operation of the shared object in the bottom application, if the shared object is dragged to the floating window, the floating window will automatically move to a position where the floating window can be fully displayed (such as the screen being centered). When the user releases and successfully sends the shared content, the floating window automatically returns to its original location. At this point, the user can continue to comfortably select the content to be shared again.

FIG. 5 is a schematic diagram showing an interface operation of a content sharing process according to an exemplary embodiment of the present disclosure, as shown in FIG 5:

The display interface of the electronic device shows an album first application 501 and a communication second application 502 in picture 51, the second application 502 is displayed in a floating window on the display interface of the first application 501.

When the user continues to press and hold on the photo 503 to be shared in picture 51 for a certain period of time, or after pressing twice in a row, the display interface changes to the interface shown in picture 52, at which time the photo 503 to be shared is in the selected state.

As shown in Fig 5b, after a long press triggers a drag operation, drag the photo to be shared 503 and judge the result of the drag operation: when a user drags the photo to be shared 503 into the interface of the second application 502, the interface shown in Picture 53 is displayed. The floating window of the second application 502 is automatically displaced upward and displayed in the center of the display screen, that is, the position of the second application 502 in the display screen is changed, as shown in the interface shown in Picture 54. In this way, the user can see the entire page layout of the second application 502, it is facilitate for the user to share.

As shown in 5c in FIG. 5, at this time, if the user releases his hand in the display interface of the second application 502, as shown in FIG. 55, the photo 503 to be shared is shared with the second application 502, and the floating window of the second application 502 is automatically returned to the original position.

As shown in 5d in FIG. 5, of course, if the user continues to drag, as shown in the interface shown in FIG. 56, drag the photo 503 to be shared outside the area where the second application 502 is located, and then releasing the hand will cause sharing to be canceled. If the user releases his hand, as shown in the interface shown in Picture 57, the photo sharing will be canceled, and the floating window of the second application 502 will be automatically returned to its original position.

The embodiment of the present disclosure also provides a method of dragging and dropping content from the bottom application to share to a floating window. When dragging and dropping a sharing object onto the interface where the floating window is located, the floating window can not only move, but also change the display state to facilitate sharing. For example, if a floating window is hidden in a bubble state in the sidebar (such as a WeChat bubble), when you drag a sharing object onto the bubble, the corresponding floating window will automatically pop up from the sidebar to display on the interface, and the user can release their hands inside the floating window to send the content to be shared.

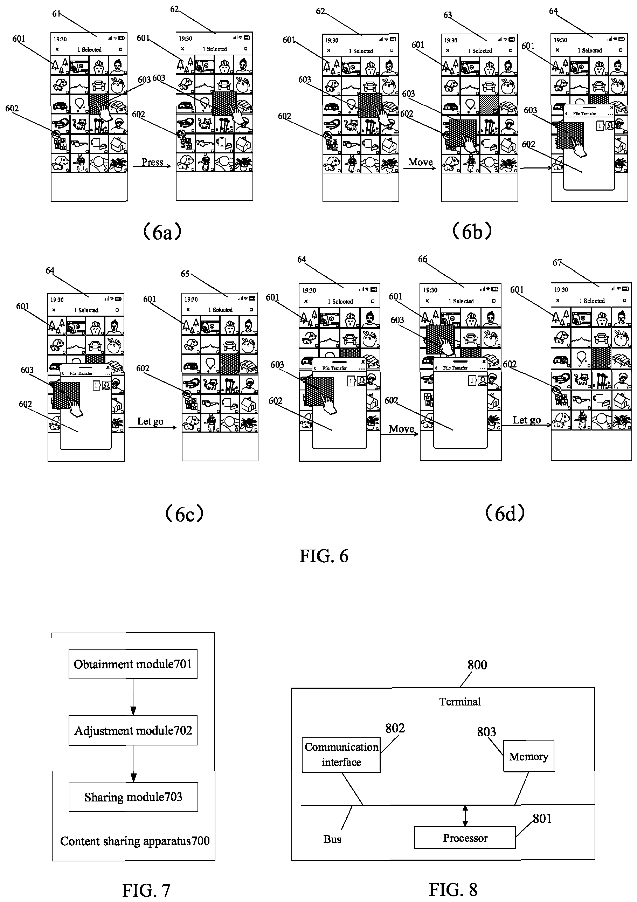

FIG. 6 is a schematic diagram showing an interface operation of a content sharing process according to an exemplary embodiment of the present disclosure, as shown in Fig 6:

the display interface of the electronic device shows an album first application 601 and a communication second application 602 in picture 61, the second application 602 is displayed in a "bubble" on the display interface of the first application 601.

When the user continues to press and hold on the photo 603 to be shared in picture 61 for a certain period of time, or after pressing twice in a row, the display interface changes to the interface shown in picture 62, at which time the photo 603 to be shared is in the selected state.

As shown in Fig 6b, after a long press triggers a drag operation, drag the photo to be shared 603 and judge the result of the drag operation: when a user drags the photo to be shared 603 into the interface of the second application 602, the interface shown in Picture 63 is displayed. As shown in Picture 63, the second application 602 is displayed in the center of the display screen in a floating window state. As shown in Picture 64, in this way, the user can see the entire page layout of the second application 602, it is facilitate for the user to share.

As shown in Figure 6c, at this time, if the user releases his hand within the interface of the second application 602, as shown in Picture 65, the photo 603 to be shared is shared with the second application 602, and the interface of the second application 602 will automatically change to a "bubble" state and return to the original position.

As shown in Figure 6d, of course, if the user continues to drag, as shown in the interface shown in Picture 66, drag the photo 603 to be shared outside the area where the second application 602 is located, and then releasing the hand will cause sharing to be canceled. If the user releases his hand, as shown in the interface shown in Picture 67, the photo sharing will be canceled, the interface of the second application 602 will automatically be changed to a "bubble" state and returned to the original position.

The embodiment of the present disclosure cleverly avoids the pain points caused by the existing scheme during the user's drag sharing process, making it possible for the user to avoid any unnecessary blocking during the drag sharing process, and to simply and quickly cancel sharing and return to the floating window. The embodiment of the present disclosure solves the scene pain points during the user's drag sharing process, especially the automatic adjustment of the floating window, which makes it more convenient to perform drag and drop on small screen devices such as mobile phones.

Embodiments of the present disclosure provide a content sharing device, which includes the respective units included, and the respective modules included in the respective units, and the respective components included in the respective modules, which can be implemented by a processor in an electronic device. Of course, it can also be implemented by a specific logic circuit. In the process of implementation, the processor can be a CPU (Central Processing Unit), MPU (Microprocessor Unit), DSP (Digital Signal Processing) or FPGA (Field Programmable Gate Array), etc..

FIG. 7 illustrates a block diagram showing a structure of a content sharing apparatus according to an embodiment of the present disclosure, as shown in FIG. 7, the device 700 comprises:
obtainment module 701 configured to obtain the position information of the target icon during the move operation, in response to a move operation for a target icon in the first application interface;
adjustment module 702 configured to adjust the interface display state of the second application if the the location identified by location information is within the location range associated with the second application;
sharing unit 703 configured to share the target content corresponding to the target icon to the second application in response to the end of the move operation, if the end position of the move operation is located within the second application interface.

In some embodiments, the location identified by location information is within the range of locations associated with the second application, comprises:
the location identified by location information belongs to the application icon location of the second application;
the location identified by location information may be within the interface of the second application;
the location identified by location information belongs to the location of the shortcut icon for the second application;
the location identified by location information belongs to the location of the shortcut launch bar for the second application.

In some embodiments, the sharing module 703 includes: a sharing module configured to share the target content corresponding to the target icon with the target corresponding to the display object if the end position of the movement operation is located at the position of the display object in the second application interface.

In some embodiments, the second application comprises communication applications, the display object comprises contact identifications.

The sharing module includes: the first sharing module configured to share target content corresponding to the target icon to a contact corresponding to the contact identifier.

In some embodiments, the contact identifier includes at least one of the following: a contact avatar, a contact number, a contact conversation list item, and a contact conversation page.

In some embodiments, the second application includes file management applications, and the display object includes a folder identifier.

The sharing module includes: the second sharing module configured to save the target content corresponding to the target icon to the path where the folder is located.

In some embodiments, the second application includes a document editing application.

The sharing module 703 includes: the document sharing module configured to save the target content corresponding to the target icon to a file in the corresponding format of the document editing application.

In some embodiments, the interface display status of the second application includes at least one of the following: the size of the second application interface, the shape of the second application interface, the form of the second application, and the position of the second application in the display screen.

In some embodiments, the apparatus further includes: the first cancel sharing module configured to respond to the end of the mobile operation, and if the endpoint position of the mobile operation is located within the first application interface, the target content will not be shared.

In some embodiments, the apparatus further includes:
a recovery module configured to display the second application in its pre-adjusted state on the display after the sharing has ended;
the recovery unit further configured to display the second application in its pre-adjusted state on the display after the cancellation of the sharing has ended.

In some embodiments, the apparatus further includes:
the second cancel sharing module configured to respond to the end of the move operation, and if the endpoint position of the move operation is located in the title bar of the electronic device, the target content will not be shared;
the third cancel sharing module configured to respond to the end of the move operation, and if the endpoint position of the move operation is beyond the display boundary of the electronic device, the target content will not be shared.

The above description of the embodiment for apparatus is similar to the description of the embodiment for method, and has similar beneficial effects as the embodiment for method. For technical details not disclosed in the embodiment of the present disclosure for apparatus , please refer to the description of the embodiment of the present disclosure for method.

It should be noted that in the embodiment of the present disclosure, the content sharing method described above may also be stored in a computer readable storage medium when implemented as a software function module and sold or used as a standalone product. Based on this understanding, the technical solution of the present disclosure embodiments, which essentially or rather contributes to the prior art, may be embodied in the form of a software product stored in a storage medium comprising a number of instructions to enable an electronic device (which may be a personal computer, server, etc.) to perform all or part of the method described in the various embodiments of the present disclosure. The aforementioned storage media includes: USB flash drive, mobile hard disk, ROM (Read Only Memory), disk, CD-ROM, or other media that can store program code. In this way, embodiments of the present disclosure are not limited to any particular combination of hardware and software.

The memory is used to store content sharing programs. The communication bus is used to achieve connection communication between the processor and memory. The processor is used to execute content sharing programs stored in memory. They are used to implement the following steps: in response to a move operation for a target icon in the first application interface, obtaining the position information of the target icon during the move operation; adjusting the interface display state of the second application if the location identified by the location identified by location information is within the location range associated with the second application; in response to the end of the move operation, if the end position of the move operation is located within the second application interface, the target content corresponding to the target icon is shared to the second application.

In embodiments for apparatus, the location identified by location information is within the location range associated with the second application, including:
the location identified by location information belongs to the application icon location of the second application; the location identified by location information may be within the interface of the second application; the location identified by location information belongs to the location of the shortcut icon for the second application; the location identified by location information belongs to the location of the shortcut launch bar for the second application.

In embodiments for apparatus, if the endpoint position of the mobile operation is located within the second application interface, share the target content corresponding to the target icon with the second application, including: if the end position of the movement operation is located at the position of the display object in the second application interface, share the target content corresponding to the target icon with the target corresponding to the display object.

In some embodiments for apparatus, the second application comprises communication applications, the display object comprises contact identifications. The sharing the target content corresponding to the target icon with the target corresponding to the display object includes: sharing the target content corresponding to the target icon with the contact corresponding to the contact identifier.

In some embodiments, the contact identifier includes at least one of the following: a contact avatar, a contact number, a contact conversation list item, and a contact conversation page.

In some embodiments for apparatus, the second application comprises file management applications, the display object comprising folder identifiers. The sharing the target content corresponding to the target icon with the target corresponding to the display object includes saving the target content corresponding to the target icon to the path where the folder is located.

In some embodiments for apparatus, the second application comprises document editing applications. The sharing the target content corresponding to the target icon with the second application includes: saving the target content corresponding to the target icon to a file in the corresponding format of the document editing application.

The interface display status of the second application includes at least one of the following: the size of the second application interface, the shape of the second application interface, the form of the second application, and the position of the second application in the display screen.

In some embodiments for apparatus, the processor is also used to execute content sharing programs stored in memory to achieve the following steps: in response to the end of the move operation, if the end position of the move operation is located within the first application interface, the sharing of the target content is cancelled.

In some embodiments for apparatus, the processor is also used to execute content sharing programs stored in memory to achieve the following steps: displaying the second application in its pre-adjusted state on the display after the sharing has ended; or displaying the second application in its pre-adjusted state on the display after the cancellation of the sharing has ended.

In some embodiments for apparatus, the processor is also used to execute content sharing programs stored in memory to achieve the following steps: in respond to the end of the move operation, and if the endpoint position of the move operation is located in the title bar of the electronic device, the target content will not be shared. Alternatively, in respond to the end of the move operation, and if the endpoint position of the move operation is beyond the display boundary of the electronic device, the target content will not be shared.

Embodiments of the present disclosure provide a readable storage medium that stores a computer program that implements the steps of the content sharing method when executed by a processor.

The above description of the embodiment for the readable storage medium and the apparatus are similar to the description of the embodiment for method, and has similar beneficial effects as the embodiment for method. For technical details not disclosed in the embodiment of the present disclosure for the readable storage medium and the apparatus, please refer to the description of the embodiment of the present disclosure for method.

FIG. 8 illustrates a block diagram showing a structure of a terminal according to an exemplary embodiment of the present disclosure. As shown in Fig 8, the hardware entity of the electronic device 800 includes: a processor 801, a communication interface 802, and a memory 803, wherein, the processor 801 typically controls the overall operation of the electronic device 800; the communication interface 802 may enable the electronic device 800 to communicate with other electronic devices or servers over a network. Memory 803 is configured to store instructions and applications executed by processor 801, and cache data (such as image data, audio data, voice communication data, and video communication data) to be processed or already processed by various modules in processor 801 and electronic device 800 through flash memory or random access memory.

The devices and methods disclosed in the embodiments provided in the present disclosure may be implemented in other ways. The embodiments for apparatus described above are only illustrative. For example, the division of the module is only a logical functional division, which can be implemented in other ways, such as multiple units or components can be combined or integrated into another system, or some features can be ignored or not executed. In addition, the direct coupling or communication connection between the various components displayed or discussed can be through some interfaces, and the indirect coupling or communication connection of devices or units can be electrical, mechanical, or other forms.

The modules described above as separate components may or may not be physically separate. The components displayed as modules can be or not physical units, meaning they can be located in one place or distributed across multiple network units. Some or all of the modules can be selected according to actual needs to achieve the purpose of this solution.

In addition, in the embodiments disclosed in the present disclosure, each functional module can be fully integrated into a single processing module, each module can be treated as a separate module, or two or more modules can be integrated into one unit. The integrated units mentioned above can be implemented in both hardware and software functional units. Ordinary technical personnel in this field can understand that all or part of the steps to implement the above embodiments for methods can be completed through hardware related to program instructions. The afore mentioned program can be stored in a computer readable storage medium, and when executed, the program executes the steps including the above embodiments. The storage medium includes various media that can store program code, such as mobile storage devices, ROM, RAM, magnetic disks, or optical disks.

The methods disclosed in the method embodiments can be arbitrarily combined to obtain new method embodiments without conflict. The features disclosed in the device embodiments provided in this application can be arbitrarily combined to obtain new device embodiments without conflict. The features disclosed in the device embodiments provided in this application can be arbitrarily combined to obtain new device embodiments without conflict.

The above is only the specific implementation method in the present disclosure, but the protection scope of the present disclosure is not limited to this. Any technical personnel familiar with the technical field who can easily think of changes or replacements within the technical scope disclosed in the present disclosure should be covered within the protection scope of the present disclosure. Therefore, the protection scope of the present disclosure should be based on the protection scope of the claims.

## Claims

1. A file sharing method applied to an electronic device having a display, comprising:
obtaining the position information of the target icon during the move operation in response to a move operation for a target icon in the first application interface;
adjusting the interface display state of the second application if the location identified by location information is within the location range associated with the second application;
sharing the target content corresponding to the target icon with the second application if the end position of the move operation is in the second application interface, in response to the end of the move operation.

2. The method according to claim 1, wherein said the location identified by location information is within the location range associated with the second application comprises at least one of:
the location identified by location information belongs to the application icon location of the second application;
the location identified by location information may be within the interface of the second application;
the location identified by location information belongs to the location of the shortcut icon for the second application;
the location identified by location information belongs to the location of the shortcut launch bar for the second application.

3. The method according to claim 1, wherein said sharing the target content corresponding to the target icon with the second application if the end position of the move operation is in the second application interface comprises:
sharing the target content corresponding to the target icon with the target corresponding to the display object, if the end position of the move operation is located at the position of the display object in the second application interface.

4. The method according to claim 3, wherein the second application comprises the communication application, the display object comprises the contact identifier;
the sharing the target content corresponding to the target icon with the target corresponding to the display object comprises: sharing the target content corresponding to the target icon with the contact corresponding to the contact identifier.

5. The method according to claim 4, wherein the contact identifier comprises at least one of:
a contact avatar, a contact number, a contact conversation list item, and a contact conversation page.

6. The method according to claim 3, wherein the second application comprises the file management application, the display object comprises the folder identifier;
the sharing the target content corresponding to the target icon with the target corresponding to the display object comprises: saving the target content corresponding to the target icon to the path where the folder is located.

7. The method according to claim 1, wherein the second application comprises the document editing application;
the sharing the target content corresponding to the target icon with the second application comprises: saving the target content corresponding to the target icon to a file in a corresponding format of the document editing application.

8. The method according to claim 1, wherein the interface display state of the second application comprises at least one of:
the size of the second application interface, the shape of the second application interface, the form of the second application, and the position of the second application in the display.

9. The method according to claim 8, wherein the method further comprises:
in response to the end of the move operation, if the end position of the move operation is located within the first application interface, cancelling the sharing of the target content.

10. The method according to any one of claims 1 to 9, wherein the method further comprises:
displaying the second application on the display in its pre-adjusted state after the sharing has ended;
or, displaying the second application on the display in its pre-adjusted state after cancelling the sharing of the target content.

11. The method according to claim 8, wherein the method further comprises:
in response to the end of the move operation, if the end position of the move operation is located at the position of the title bar of the electronic device, canceling the sharing of the target content.
or, in response to the end of the move operation, if the end position of the move operation is beyond the display boundary of the electronic device, canceling the sharing of the target content.

12. A content sharing apparatus, wherein the apparatus comprises:
obtainment module is configured to obtain the position information of the target icon during the move operation in response to a move operation for a target icon in the first application interface;
adjustment module is configured to adjust the interface display state of the second application if the location identified by location information is within the location range associated with the second application;
sharing module is configured to share the target content corresponding to the target icon with the second application if the end position of the move operation is in the second application interface, in response to the end of the move operation.

13. A terminal, wherein the terminal comprises at least: a memory, a communication bus, and a processor;
the memory for storing content sharing procedures;
the communication bus for implementing the connection communication between the processor and the memory;
the processor for implementing content sharing programs stored in memory to achieve the following steps:
obtaining the position information of the target icon during the move operation in response to a move operation for a target icon in the first application interface;
adjusting the interface display state of the second application if the location identified by location information is within the location range associated with the second application;
sharing the target content corresponding to the target icon with the second application if the end position of the move operation is in the second application interface, in response to the end of the move operation.

14. The terminal according to claim 13, wherein said the location identified by location information is within the location range associated with the second application comprises at least one of:
the location identified by location information belongs to the application icon location of the second application;
the location identified by location information may be within the interface of the second application;
the location identified by location information belongs to the location of the shortcut icon for the second application;
the location identified by location information belongs to the location of the shortcut launch bar for the second application.

15. The terminal according to claim 13, wherein said sharing the target content corresponding to the target icon with the second application if the end position of the move operation is in the second application interface comprises:
sharing the target content corresponding to the target icon with the target corresponding to the display object, if the end position of the move operation is located at the position of the display object in the second application interface.

16. The terminal according to claim 15, wherein the second application comprises the communication application, the display object comprises the contact identifier;
the sharing the target content corresponding to the target icon with the target corresponding to the display object comprises: sharing the target content corresponding to the target icon with the contact corresponding to the contact identifier.

17. The terminal according to claim 15, wherein the second application comprises the file management application, the display object comprises the folder identifier;
the sharing the target content corresponding to the target icon with the target corresponding to the display object comprises: saving the target content corresponding to the target icon to the path where the folder is located.

18. The terminal according to claim 13, wherein the second application comprises the document editing application;
the sharing the target content corresponding to the target icon with the second application comprises: saving the target content corresponding to the target icon to a file in a corresponding format of the document editing application.

19. The terminal according to any one of claims 13 to 18, wherein the processor for implementing content sharing programs stored in memory to achieve the following steps:
displaying the second application on the display in its pre-adjusted state after the sharing has ended;
or, displaying the second application on the display in its pre-adjusted state after cancelling the sharing of the target content.

20. A computer-readable storage medium, having a computer program stored thereon, and when the computer program is executed by a processor, the steps in the content sharing method of any one of claims 1 to 11 are implemented.
